(19) Europäisches Patentamt / European Patent Office / Office européen des brevets

(11) **EP 4 748 788 A2**

(12) **EUROPEAN PATENT APPLICATION**

(43) Date of publication:
27.05.2026  Bulletin 2026/22

(21) Application number: 26164731.7

(22) Date of filing: 02.09.2022

(51) International Patent Classification (IPC):
*C01B 32/00* (2017.01)

(52) Cooperative Patent Classification (CPC):
**C09D 11/52; C01B 32/159; C01B 32/194;
C09D 11/037; C09D 11/324; H01B 1/24;**
C01B 2202/34; C01B 2202/36; C01B 2204/04;
C01P 2006/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:  03.09.2021  EP 21194844

(62) Document number(s) of the earlier application(s) in
accordance with Art. 76 EPC:
22773169.2 / 4 396 296

(71) Applicant: **Advanced Material Development
Limited**
**Farnborough, Hampshire GU14 7JP (GB)**

(72) Inventors:
• **DALTON, Alan**
**Brighton, BN1 9RH (GB)**
• **JOHNSTONE, James**
**Farnborough, GU14 7JP (GB)**

• **LARGE, Matthew**
**Brighton, BN1 9RH (GB)**
• **OGILVIE, Sean**
**Brighton, BN1 9RH (GB)**
• **WILDERSPIN, Tim**
**Brighton, BN1 9RH (GB)**
• **GRAF, Aline Amorim**
**Brighton, BN1 9RH (GB)**

(74) Representative: **Schlich
9 St Catherine's Road
Littlehampton
West Sussex BN17 5HS (GB)**

Remarks:
This application was filed on 13.03.2026 as a
divisional application to the application mentioned
under INID code 62.

(54) **CARBON-BASED CONDUCTING INKS**

(57)  The invention provides electrically conductive films containing graphene nanoplatelets packed in a substantially Apollonian manner. The films may also comprise carbon nanotubes in order to improve their conductivity. The invention also provides liquid compositions that can be used to print the electrically conductive films described herein.

Figure 1

## Description

### Introduction

This present invention relates to conducting inks containing carbon nanomaterials, methods of making such inks, their applications, as well as substrates onto which the conducting inks have been printed.

### Background to the Invention

Two-dimensional (2D) materials are crystalline materials consisting of a few layers or even just a single layer (monolayer) of atoms or molecules. A wide range of 2D materials are known and include graphene, hexagonal boron nitride (h-BN), and transition metal dichalcogenides (TMDs). TMDs have the formula $MX_2$, wherein M is a transition metal and X is a chalcogen atom (S, Se or Te). Examples of such TMDs include molybdenum disulphide ($MoS_2$), niobium diselenide ($NbSe_2$) and tungsten disulphide ($WS_2$).

2D materials are known to have many interesting and potentially useful properties, which differ from the properties of the corresponding bulk 3D material. For example, graphene is highly conductive and has applications in electrode structures as well as in conductive composites.

The interesting functional properties of many materials are often only observed when the materials are in their mono- or few-layer (i.e. 2D) forms. However, strong interlayer dispersion forces must be overcome in order to exfoliate bulk three-dimensional (3D) materials to form the corresponding 2D materials.

Carbon nanotubes are nanosized tubes constructed from rolled sheets of graphene. The tubes typically have a diameter in the range of 1 to 50 nanometres but can have lengths in the micrometre range. Carbon nanotubes can be either single-walled (i.e. formed from a single rolled sheet of graphene) or multi-walled (i.e. formed from a plurality of concentric rolled sheets of graphene). Carbon nanotubes have attracted great interest due to their physical properties - namely their high tensile strength and high electrical conductivity.

Liquid dispersions containing carbon nanomaterials (e.g. carbon nanotubes, carbon nano-graphite, graphene and mixtures thereof) have been considered as inks that can be used to deposit conductive films. Such films have the advantage that they would be "metal-free" for certain commercial applications, but nevertheless conductive. However, to date the use of such inks has been limited to the low conductivity of the printed films. For example, while copper has a conductivity in the range of $6 \times 10^7$ S/m, reported films produced from carbon nanomaterials typically have conductivities of much less than 100 S/m (see US 10,244,628). Further, the printed carbon-containing inks that do exist are printable only onto a limited range of substrates such as aluminium and plastic (polyethylene terephthalate, PET, in particular). These substrates are not recyclable.

Formation of printable inks based on dispersions of carbon nanomaterials in water have suffered from flocculation issues due to the non-polar nature of these materials. This reduces industrial application due to settlement of nanocarbon materials and the need for excess organic solvents.

Khan et al., "The preparation of hybrid films of carbon nanotubes and nano-graphite/graphene with excellent mechanical and electrical properties", Carbon 48 (2010), pp. 2825-2830 describes hybrid films containing both carbon nanotubes and nano-graphite that possess greater electrical conductivities than films containing each component alone. However, Khan *et al* only describe dispersions of nano-graphite and carbon nanotubes in an N-methyl pyrrolidone solvent. The solvent is removed via vacuum filtration to form a film of the carbon nanomaterials. The conductivity of the films is only up to $2 \times 10^4$ S/m and this liquid formulation is not suitable for printing.

Pan et al., "Sustainable production of highly conductive multilayer graphene ink for wireless connectivity and IoT applications", Nature Comm. (2018), 9:5197, describes inks containing graphene, dihydrolevoglucosenone and NMP. Films printed from these inks exhibited conductivities of only $7.13 \times 10^4$ S/m.

Ferrari et al (WO2017/060497A1), describe the production of liquid phase exfoliated GNP/carboxy methyl cellulose films which exhibited a conductivity of $7.14 \times 10^4$ S/m. These films were printed onto PET substrates and used for the fabrication of UHF RFID tag with a read range of 1.4 m at 2 W of incident radiation.

Our earlier patent application (PCT patent application no. PCT/EP2021/055458) describes *inter alia* inks containing graphene nanoplatelets and carbon nanotubes which can be printed to form films possessing good electrical conductivity. Using approximately a 2:1 ratio of nanoplatelets to nanotubes, conductivities of up to 500 kS/m could be achieved.

Ecological recycling of mixed material objects is an enduring challenge especially within the electronics industry. Implementing electronic systems which are less detrimental to the environment stimulates new innovations in the combinations of materials which are used to produce these devices. Mass produced UHF RFID tags are composed of mixed materials (plastic, metal, silicon and paper). Moving towards materials which have increased ecological credentials and acceptable performance is of interest to many stakeholders. In some instances, metal is not preferred due to strict requirements for screening of goods for protection of consumer interests.

High solids content inks are essential requisites to reduce the environmental burden of printing through the drying process. Stabilising nanocarbon dispersions using cooperative binders increases the potential thickness of screen-printed films. This serves to reduce resistive losses which are essential for various printed electronic applications. For efficient carbon-based RF antenna applications should be less than the printed film thickness, typically limited to <100 $\mu$m by process and ink solids content consideration (Jordan, Edward Conrad (1968), Electromagnetic Waves and Radiating Systems, Prentice Hall, ISBN 978-0-13-249995-8).

There is still the need for alternative constructions based on carbon-based conducting inks alternative, preferably with improved electrical conductivity and/or that can be printed onto recyclable substrates.

## Summary of the Invention

The inventors of the present application have found that the conductivity of films containing graphene nanoplatelets can be improved by applying the principle of Apollonian packing.

Accordingly, in a first aspect, the invention provides an electrically conductive film comprising graphene nanoplatelets packed in a substantially Apollonian manner.

The conducting films may also comprise carbon nanotubes to act as fillers, which bridge the gaps between graphene nanoplatelets in the film in order to further increase the electrical conductivity of the films. However, as a result of the Apollonian packing of the nanoplatelets in the film and the consequential improved conductivity, high electrical conductivities can be obtained using lower amounts of carbon nanotubes (compared to those described in our earlier International PCT patent application no. PCT/EP2021/055458, published as WO 2021/175989).

Percolation theory describes the connectivity of objects within a network (for example, graphene nanoplatelets and carbon nanotubes) and the effect of their connectivity on properties of the macroscale material, such as conductivity. Traditional electrical percolation theory states that for a mixture of a dielectric component and a metallic component, the conductivity and the dielectric constant of the mixture will exhibit a critical behaviour, when the fraction of the metallic component reaches the percolation threshold.

The inventors of the present invention have found that the percolation threshold (with respect to the amount of carbon nanotubes) for a mixture of graphene nanoplatelets and carbon nanotubes can be reduced by decreasing the void fraction in a matrix of graphene nanoplatelets. This can be achieved by applying the principle of Apollonian packing.

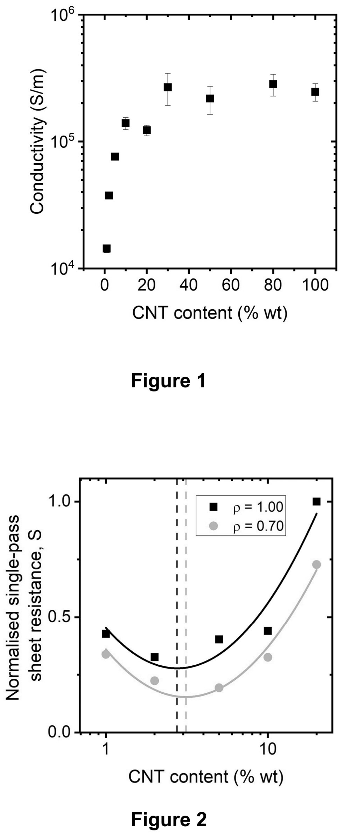

Figure 1 shows a conductivity percolation data set obtained by measurement of the sheet resistance and thickness of films prepared from coatings with carbon nanotube (CNT) content relative to the sum of carbon nanotubes and graphene nanoplatelets content as given. The optimum CNT content was calculated based on a transformation of the data which estimates the printed sheet resistance using the conductivity and solids contents of the inks. A normalised single-pass sheet resistance, S, is calculated by

$$ S = \frac{\sigma_0}{\sigma} \frac{\phi}{\phi_0} $$

where $\sigma_0$ and $\phi_0$ are reference conductivity and CNT mass fraction values, and $\sigma$ and $\phi$ are the conductivity and CNT mass fraction for a chosen point on the percolation curve. The optimum CNT content of the CNT-nanoplatelet mixed films is defined as the x-value of the local minimum value of S, which is correlated with the percolation threshold of the CNTs.

Figure 2 plots two calculated sets of values for S obtained in experiments using graphene nanoplatelets fillers of different relative packing density $\rho$. The local minimum of S is obtained by applying a quadratic fit to the data. As can be seen, the GNPs with the higher relative packing density achieve a lower optimum CNT content as illustrated by the vertical dashed lines.

The 'Apollonian approach' markedly reduces the volume percentage of filler needed for electrical percolation. The principle of Apollonian packing stems from mathematical studies carried out over two thousand years ago by Apollonius of Perga who showed that successively smaller circles would fill the interstices of larger circles. In the early 20th century Furnas, while trying to describe grain systems in US mines, revisited Apollonian, circular geometry. He realised that, when thinking about hard spheres, it was possible to follow a similar construct as Apollonius had described, and that, by using a bimodal particle system, it was possible for spherical particles to pack in a similar way as described by Apollonius, so creating materials with a high density and low void fraction.

Furnas set up some relatively simple equations that described how a bimodal distribution of spherical particles can pack, when the small particles are sufficiently small as to fill the voids between the larger particles. These equations can be used to maximise the density of the overall system and hence minimise the void fraction. By applying Furnas's theory to compositions containing graphene nanoplatelets and carbon nanotubes, it is possible to force the filler to fill a reduced void space and so form a connected network at a much lower volume of nanotubes and hence produce films with very low percolation thresholds.

A major problem with previous carbon nanotube-containing composites has been that the random distribution of the carbon nanotubes within a matrix dictates that a relatively high content must be added to reach electrical percolation.

The present invention is based on the principle of segregated networks. In these segregated systems, the design of the matrix becomes the major factor in influencing the electrical properties, whereas previously it was largely irrelevant. In order to create a segregated network of conducting particles, the matrix must be carefully chosen to ensure an appropriate structure that forces the filler particles to overlap in the necessary way.

Utilising two or more mixed populations of GNPs allows for an ink which remains highly conducting and economically preferable for mass printing and coating applications by utilising typical graphite nanoplatelet distributions produced by industrial liquid phase graphite exfoliation processes.

Segregated percolation theory has been shown to depend upon the mesoscale, crystal-like structure that the conductive filler forms within the matrix used. Combining theories about particle packing and percolation threshold it is possible to optimize the final systems to create dense, low percolation systems. If the void fraction of a system is viewed as the space available to be taken up by a conductive filler, then the 'shape' of the void space will in turn define the 'shape' of the network that the filler particles form when enclosed within the system. Hence, the electrical percolation threshold of the composite will be directly linked to the void fraction of the matrix.

Apollonian-packed films described herein can be produced from liquid compositions comprising two or more populations of graphene nanoplatelets having different sizes. These populations may also occur within the same source of material, typically known as bi-modal distributions. For example, a mass of graphene nanoplatelets may comprise two or more populations of nanoplatelets having different sizes. By extension of this concept, for multiple particle size populations within a single material may be superimposed to create a broad distribution of sizes in which the fitting of small particles with larger particle occurs with ease. In this invention, 2D nanoplatelets may exist in a broad particle distribution ranging from a few nanometres up to a few microns. This allows an optimised particle packing regime which serves to reduce the percolation threshold for the filamentous carbon nanotubes. Conversely, narrow size distributions of materials lead to relatively non-optimal packing and a greater percolation threshold.

An additional benefit of optimised packing regimes is the densification of films upon printing and drying. Industrially, this removes the need for additional compression processes to increase overall film conductivity.

The invention therefore also provides a film comprising:

(i) a first population of graphene nanoplatelets; and
(ii) a second population of graphene nanoplatelets having an average size of up to 25% of the average size of the first population of graphene nanoplatelets.

The film may further comprise carbon nanotubes and/or a thickening agent, as described herein.

The films may further comprise a third population of graphene nanoplatelets having an average size of up to 25% of the average size of the second population of graphene nanoplatelets.

The highly conductive films can be produced, for example, by printing such liquid compositions.

Accordingly, the invention also provides a liquid composition comprising:

(i) a first population of graphene nanoplatelets;
(ii) a second population of graphene nanoplatelets having an average size of up to 25% of the average size of the first population of graphene nanoplatelets;
(iii) a thickening agent; and
(iv) a solvent.

The liquid compositions may further comprise a third population of graphene nanoplatelets having an average size of up to 25% of the average size of the second population of graphene nanoplatelets.

The liquid compositions may further contain carbon nanotubes, as described above in relation to the films.

The thickening agent may suitably bind the carbon nanomaterials and adhere a substrate, for example a cellulose based or other suitable hydrophilic substrate. The thickening agent may be or comprise a cellulose derivative. The inventors have also found that carbon nanomaterial-containing inks can be prepared, be printed onto, and adhere to recyclable substrates, especially paper.

The thickening agent suitably separates and encapsulates the carbon nanotubes to provide a means of dispersion for a maximum number of individual conductive pathways between the nanotubes and the conductive carbon particles.

The liquid compositions (once printed) dry to form an electrically conductive film which can adhere to cellulose-containing substrates. When the solvent is an aqueous solvent, due to the nature of interaction between the cellulose derivative thickening agent and the solvent, the compositions may also be correctly referred as hydrogel inks. Herein, reference to liquid compositions of the invention embraces hydrogel inks unless the context demands otherwise.

The above liquid compositions may also be provided in a dry-powder or aerogel composition, where the solvent is absent.

In a further aspect of the invention there is provided a substrate (for example a cellulose-based substrate) onto which a conducting ink has been printed, the conducting ink being a liquid composition as described herein.

The invention also provides a method of printing a conducting ink onto a substrate (for example, a cellulose-based substrate), the conducting ink being a liquid composition as described herein.

In a similar way to the liquid compositions described in our earlier patent application (International patent application no. PCT/EP2021/055458, published as WO 2021/175989), it is envisaged that the liquid compositions described herein can be printed onto stretchable substrates. Compositions described in further details herein which can be printed onto stretchable substrates are also provided.

According to the present invention, films with comparable conductivity to those described in PCT/EP2021/055458 (WO 2021/175989) can be prepared, but with the use of lower proportions of carbon nanotubes.

The concentration of the ink solids content and use of screen printing also promotes thick film formation necessary to achieve good conductivity (0.1 Ohm/Sq/mil), giving the films suitable antenna characteristics and the necessary electromagnetic 'skin depth' characteristics required for radiative antenna within the UHF band.

The printing of conductive structures on substrates enables a range of applications to be realised via the integration of surface mounted electronic components. Examples of potential commercial applications such as RFID tags, microheaters and sensors are described.

## Detailed Description of the Invention

The term "carbon nanomaterials" as used herein refers to nanomaterials (i.e. materials having one critical dimension an average size from 1 nm to 100 nm) that comprise or consist of carbon. Typically, the carbon nanomaterials comprise at least 90% or more by weight, preferably at least 95% or more by weight, for example 99% or more by weight of carbon. The term includes materials such as graphene, graphite nanoplatelets, single-walled carbon nanotubes, multi-walled carbon nanotubes, crystalline diamond, and diamond-like carbon (see ISO standard ISO/TS 80004-3:2020). The dimensions of nanomaterials can be determined by transmission electron microscopy. The carbon nanomaterial-containing films and liquid compositions described herein may comprise graphene nanoplatelets on their own or graphene nanoplatelets with single-walled carbon nanotubes, multi-walled carbon nanotubes, or both. In particular, the films and liquid compositions described herein comprise a mixture of (i) graphene nanoplatelets and (ii) single-walled carbon nanotubes.

It has been found that a cooperative effect with respect to conductivity exists in compositions containing both graphene nanoplatelets and single-walled carbon nanotubes. Without wishing to be bound by theory, it is thought that the carbon nanotubes provide a conductive bridge between individual graphene nanoplatelets and thus reduce the "patch resistance" of individual nanoplatelets. Patch resistance is caused by the finite tunnelling of electrons between adjacent sheets which is much higher than movements within the internal structure of the sheets (in graphene nanoplatelets) or rods (in carbon nanotubes). In addition, without wishing to be bound by theory, the inventors believe that the junction resistance between a graphene nanoplatelet and a carbon nanotube is lower than the junction resistance between two nanoplatelets or two nanotubes. Therefore, intimate mixing of the nanoplatelets and nanotubes results in an improved conductivity of films formed from the liquid compositions described herein comprising both graphene nanoplatelets and carbon nanotubes (specifically single-walled carbon nanotubes).

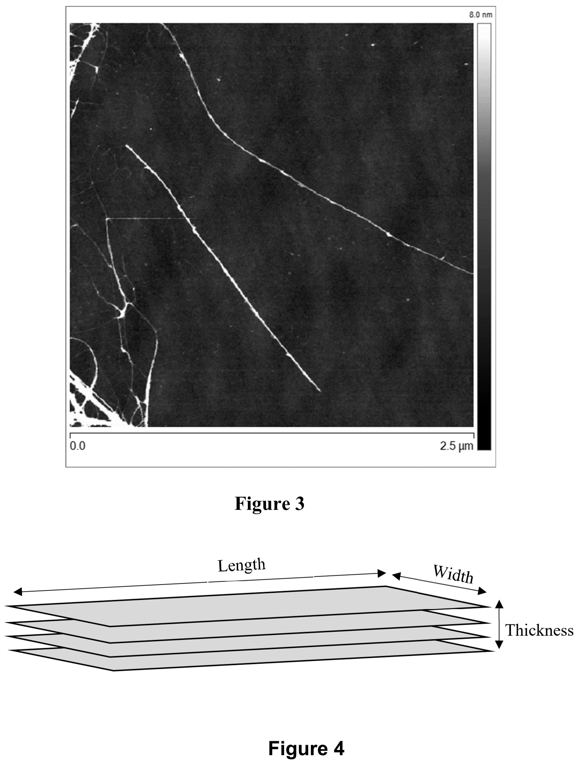

To maximise this effect, the carbon nanotubes are preferably individualised. Typically, greater than 75%, for example greater than 80%, preferably greater than 85% of the carbon nanotubes by weight of the nanotubes within the composition are individualised. Individualised nanotubes can be seen in Figure 3. The degree of individualisation of nanotubes can be determined from UV-Vis spectroscopy, as individualised single-walled carbon nanotubes show Van Hove singularities (peaks) at specific wavelengths (Alafogianni et al., Colloids and Surfaces A: Physicochemical and Engineering Aspects, Vol 495, (2006), pp. 118-124). These UV-Vis absorptions are not visible for bundled carbon nanotubes, and so the prominence of these peaks gives a measure of exfoliation/individualisation.

The packing of different non-soluble geometric shapes and size particles can lead to a diverse range of physical properties enhancements depending on the nature of those particles. This effect is also prevalent down into the nanoscale. Through careful combination of different particle sizes and geometries, it is possible to tune the overall physico-chemical properties of formulated systems to achieve desired characteristics. In commercial applications, cost factors of the most active elements often require the system to be filled with a significant fraction (>50%) of lower cost filler materials that do not affect performance to an unacceptable level or are added to impart another property such as thermal conductivity, mechanical strength and/or chemical reactivity. In this invention, concentration of the most conductive elements within the packing voids within a matrix of larger conductive carbon particles (which may exhibit one dimension at the nanoscale) enables cost-effective formulations to be derived. The blending of thixotropic single wall carbon nanotube hydrogels with conductive carbon particles ensures that high conductivity is maintained throughout the printing and drying process resulting in superior film conductivities.

As described above, the films may comprise a first population of larger nanoplatelets and a second population of smaller nanoplatelets. The first population of larger nanoplatelets forms a close-packed matrix and the second population of smaller nanoplatelets can fill the interstitial sites (or voids) within the matrix of larger nanoplatelets. In order to fit within the interstitial sites formed by the packing of the larger nanoplatelets, the smaller second population of nanoplatelets have an average size of up to 25% of the size of the first population of nanoplatelets. Typically, the second population of nanoplatelets have a size of 20% or less, typically 17% or less, for example 15% or less of the size of the first population of nanoplatelets.

The films may further comprise a third population of nanoplatelets which fill the interstitial sites formed by packing of the second populations of nanoplatelets (with the first population of nanoplatelets). The third population of nanoplatelets has a size of up to 25% of the size of the second population of nanoplatelets, typically up to 20%, preferably up to 17% and for example up to 15%.

The first population of graphene nanoplatelets typically comprises 40% or greater (w/w), for example 50% or greater (w/w), such as 60% or greater (w/w) of the total amount of nanoplatelets in the film.

The second population of graphene nanoplatelets typically comprises 50% or less (w/w), for example 35% or less (w/w), such as 25% or less (w/w) of the total amount of nanoplatelets in the film.

Throughout, references to the sizes of the first, second or third populations of the nanoplatelets typically refer to the largest lateral dimension of the nanoplatelets (for example, the longer of the length and width of the nanoplatelets as indicated in Figure 4).

The Apollonian packing of the graphene nanoplatelets results in an improved packing efficiency of the nanoplatelets. In the films described herein, the nanoplatelets are typically packed with a packing efficiency of from greater than 5%, preferably greater than 10% for example greater than 15% and optionally up to 40%. Alternatively, the packing efficiency can also be determined by measuring the void space within a packed matrix of nanoplatelets. In the films described herein, the Apollonian packed nanoplatelets typically have a void space of 95% or less, preferably 90% or less, for example 85% or less. Generally, the void space is greater than 60%. The packing efficiency is determined by calculating the ratio of the measured film density to the density for an ideally-packed single-crystal graphite. The void space can be calculated as the volume not occupied by the material.

As a result of the closer packing, the resulting films have an increased density. Accordingly, the films described herein have a density of 200 kg/m$^3$ or greater, preferably 250kg/m$^3$ or greater, more preferably 300kg/m$^3$ or greater, for example 350kg/m$^3$ or greater or 375 kg/m$^3$ or greater. Density is calculated by measuring the weight and volume occupied by the film. The volume of the films can be measured by profilometry to measure the thickness of the films. Alternatively, the density can be calculated from buoyance measurements. For comparative purposes, it is noted that the density of the films described in PCT/EP2021/055458 (WO 2021/175989) is approximately 160 kg/m$^3$.

The term "graphene nanoplatelets" as used herein (also referred to herein as "graphite nanoplatelets") refers to nanoparticles of graphite which consist of small stacks of a graphene. The term "few-layer" nanoplatelets refers to nanoplatelets having on average 30 or fewer layers, suitably 20 or fewer layers, typically 15 layers or fewer, preferably 10 or fewer layers. Layer numbers can be determined by UV-vis spectroscopy (see C. Backes et al., 'Spectroscopic metrics allow in-situ measurement of mean size and thickness of liquid-exfoliated graphene nanosheets', Nanoscale, 2016, doi: 10.1039/C5NR08047A).

The graphite nanoplatelets typically comprise greater than 80% by weight of carbon, preferably greater than 90% by weight of carbon, for example greater than 95% by weight of carbon. In some compositions described herein, the conductive carbon particles consist of carbon (i.e. contain carbon and no other element, to a significant extent).

The graphite nanoplatelets are electrically conductive. Therefore, the proportion of carbon atoms in the conductive carbon particles in an sp$^2$ hybridisation state is typically 50% or greater, for example 75% or greater, preferably 90% or greater.

The graphite nanoplatelets typically have an average thickness of less than 50nm, typically less than 30 nm, for example less than 20 nm. The term "thickness" as used herein refers to the dimension of the nanoplatelets along the axis of stacking of the layers within the nanoplatelets. The terms "length" and "width" refer to the longer and shorter dimensions of the nanoplatelets along perpendicular axes in the plane of the sheets of the layered materials respectively (see Figure 4).

The nanoplatelets (for example, the first population of nanoplatelets) typically have an average (median) length and/or width of 30 nm or greater, preferably 100 nm or greater or 500 nm or greater. Preferably, the nanoplatelets in the first population have an average length 1 $\mu$m or greater, such as 2 $\mu$m or greater, for example 3$\mu$m or greater . The nanoplatelets typically have an average (median) length and/or width of 50$\mu$m or less, or 30$\mu$m or less, such as 10 $\mu$m or less, typically 9.0 $\mu$m or less, for example 8.0 $\mu$m or less. The dimensions of the nanoplatelets can be measured using scanning or transmission electron microscopy. The nanoplatelets are typically only micron-sized in two dimensions (i.e. their length and width, with their thickness being significantly less than 1 $\mu$m, for example less than 100 nm). As mentioned above, these dimensions can be measured by transmission electron microscopy.

The total graphite nanoplatelets are typically present in the film in an amount of from 85% (w/w), typically from 90% (w/w), preferably from 92% (w/w), for example from 94% (w/w) and/or up to 99% (w/w), preferably up to 98% (w/w), for example up to 97% (w/w).

The carbon nanotubes may be single-walled carbon nanotubes (SWCNT) or multi-walled carbon nanotubes (MWCNT), but preferably comprise or consist of single-walled carbon nanotubes. The carbon nanotubes typically have an outer mean diameter of from 1 nm to 5 nm, preferably from 1 nm to 2 nm (as determined by transmission electron microscopy) and may have a length of greater than 200nm or greater than 3 $\mu$m, typically greater than 5 $\mu$m, for example greater than 10 $\mu$m or greater than 15 $\mu$m. The carbon nanotubes may have an aspect ratio of 50 or greater, typically 100 or greater. Here, the aspect ratio refers to the ratio of the length of the nanotubes compared to their diameter. Whereas the graphene nanoplatelets are micron-sized in two dimensions, the carbon nanotubes are only micron-sized in a single dimension (i.e. along their length).

The amount of carbon nanotubes present can be defined relative to the amount of carbon nanoplatelets present. The carbon nanotubes may be present in the films described herein in a weight ratio relative to the amount of graphite nanoplatelets of less than 1:15 or less than 1:20, typically less than 1:30 or less than 1:40 (carbon nanotubes:graphene nanoplatelets), for example less than 1:50 or less than 1:60, preferably greater than 1:100 suitably greater than 1:90.

The carbon nanotubes are typically present in the films in a weight ratio relative to the amount of graphite nanoplatelets of from 1:15 to 1:100, for example from 1:30 to 1:80 or 1:50 to 1:70 (carbon nanotubes:graphene nanoplatelets), preferably in a ratio of from 1:55 to 1:65.

As discussed above, the Apollonian packing of the nanoplatelets results in an improved electrical conductivity of the films and therefore a lower amount of carbon nanotubes needs to be added to achieve a comparable level of conductivity.

Apollonian-packed films described herein can be produced from liquid compositions comprising two or more populations of graphene nanoplatelets having different sizes. The films can be produced, for example, by printing such liquid compositions.

Accordingly, the invention also provides a liquid composition comprising:

(i) a first population of graphene nanoplatelets;
(ii) a second population of graphene nanoplatelets having an average size of up to 25% of the average size of the first population of graphene nanoplatelets;
(iii) a thickening agent; and
(iv) a solvent.

The liquid compositions may further comprise a third population of graphene nanoplatelets having an average size of up to 25% of the average size of the second population of graphene nanoplatelets.

In order to form Apollonian packed films, the second population of nanoplatelets may have a relative size compared to the size of the first population as of larger nanoplatelets as described above in relation to the films. The liquid composition may also comprise a third population of nanoplatelets optionally having a size relative to the second population of nanoplatelets as described above in relation to the films.

The graphite nanoplatelets are typically present in the liquid composition in an amount of from 5% (w/w), preferably from 7%, for example from 8% and up to 20% (w/w), preferably up to 15% (w/w), for example up to 10% (w/w).

As discussed above in relation to the films, the first population of graphene nanoplatelets typically comprises 40% or greater (w/w), for example 50% or greater (w/w), such as 60% or greater (w/w) of the total amount of nanoplatelets in the liquid composition.

The second population of graphene nanoplatelets typically comprises 50% or less (w/w), for example 35% or less (w/w), such as 25% or less (w/w) of the total amount of nanoplatelets in the liquid composition.

The quantity of carbon nanotubes in the compositions may be defined relative to the weight of the total composition. For example, the carbon nanotubes may be present in the liquid composition in an amount of from 0.01% (w/w), preferably from 0.025% or 0.05%, for example from 0.1% and up to 1% (w/w), preferably up to 0.5% (w/w), for example up to 0.2% (w/w). When the liquid composition has dried to form a dry film, the carbon nanotubes are typically present in an amount of from 0.5% (w/w), preferably from 1% (w/w) and up to 10% (w/w), such as up to 5% (w/w) or up to 3% (w/w), preferably up to 2.5% (w/w), for example up to 2% (w/w).

As discussed above in relation to the films of the invention, the amount of carbon nanotubes present can be defined relative to the amount of carbon nanoplatelets present. The carbon nanotubes may be present in the liquid compositions described herein in a weight ratio relative to the amount of graphite nanoplatelets of less than 1:15 or less than 1:20, typically less than 1:30 or less than 1:40 (carbon nanotubes:graphene nanoplatelets), for example less than 1:50 or less than 1:60, preferably greater than 1:100 suitably greater than 1:90.

The carbon nanotubes are typically present in the liquid compositions in a weight ratio relative to the amount of graphite nanoplatelets of from 1:15 to 1:100, for example from 1:30 to 1:80 or from 1:50 to 1:70 (carbon nanotubes:graphene nanoplatelets), preferably in a ratio of from 1:55 to 1:65.

The solvent may be an aqueous or non-aqueous solvent. However, the solvent preferably is or comprises water (necessary for hydrogel formation). Alternatively, the solvent may be a dipolar aprotic solvent. Examples of such dipolar aprotic solvents include cyclopentanone, cyclohexanone, N-methylpyrrolidone (NMP), dimethylformamide (DMF), dimethylsulphoxide (DMSO), dimethylacetamide (DMAc), sulpholane, dihydrolevoglucosenone (Cyrene) and lactones, such as gamma-valerolactone. It has been found that a solvent system comprising a combination of water and gamma-valerolactone results in an ink which is suitable for printing onto stretchable substrates (see Example 4 below). When present, the gamma-valerolactone may be present in an amount of from 1% to 10% (w/w), for example from 1% to 5% (w/w).

The compositions also include a thickening agent (which may also act as gelification agents) to increase the viscosity of the compositions. The increased viscosity ensures that the compositions are suitable for printing and also reduces tendency of the carbon nanomaterials to flocculate.

The thickening agent is preferably a hydrogel-forming thickening agent. As discussed above, the formation of a hydrogel matrix containing carbon nanotubes and conductive carbon particles results in a highly conductive ink. The hydrogel-forming thickening agents are generally hydrophilic polymer chains which form a colloidal gel through extensive hydrogen-bonding networks in water.

The thickening agents also preferably bind to cellulose, for example when an ink / liquid composition of the invention is printed onto and dries on a cellulose-containing substrate (such as paper).

Examples of suitable thickening agents include:

- cellulose derivatives, such as carboxymethyl cellulose (CMC), methyl cellulose, hydroxy ethyl cellulose and carboxy ethyl cellulose, and salts thereof (such as sodium salts thereof);
- polymers such as polyethylene oxide (PEO), polypropylene oxide (PPO); polyanaline (PANI), polyvinylpyrrolidone (PVP), polyvinyl alcohol (PVA) and poly N-isopropylacrylamide (PNIPAAm);
- cyclodextrins;
- natural gelification agents such as xanthan gum, gelatine, glycerol, alginates, chitosan;
- inorganic silicas and clays such as bentonite, montmorillonites, laponite, nano-silica and titania; and
- filamentous or rod-like materials, for example those having an aspect ratio of greater than 100 (e.g. carbon nanotubes).

In a preferred embodiment, the thickening agent is a cellulose derivative, such as carboxymethyl cellulose. The term cellulose derivate as used herein refers to chemical derivatives of cellulose formed by functionalisation of some or all of the hydroxyl groups presence in cellulose (for example via etherification or esterification reactions). Derivatives can be formed by incorporation of one or more or all of carboxy, hydroxy, methyl, ethyl and/or propyl groups. Examples of cellulose derivatives include hydroxypropylmethylcellulose, hydroxypropylcellulose, methylethylcellulose, methylcellulose and carboxymethylcellulose or a combination thereof, as well as cellulose itself. It has been found that liquid ink compositions containing this type of binder advantageous adhere to paper substrates. CMC is available in several forms (e.g. varying by degree of substitution and function) and can be crosslinked with several chemical agents either covalently or through hydrogen bonding networks with other agents to impart new properties which can be tailored according to requirements (Gels 2018, 4, 54; doi: 1 0.3390/gels4020054).

Cellulose derivatives readily form hydrogels which are utilised in many industrial applications. These materials may also act as surface active agents which stabilise nanocarbon materials in aqueous solvents. Hydrogels exhibit ideal thixotropic behaviour due to their extended hydrogen bonding or supramolecular network formation behaviour. These networks serve to provide long range ordering to improve rheological behaviour.

The total concentration of the thickening agents may be in the range of 0.05% to 2% by weight of the total composition (including the solvent), typically from 0.07% to 1%, for example from 0.1% to 0.5% by weight of the total composition.

The thickening agent increases the viscosity of the composition and it is envisaged that it also enables the carbon nanotubes (when present) to form a pre-ordered supramolecular network, which increases the conductivity of films printed from the composition.

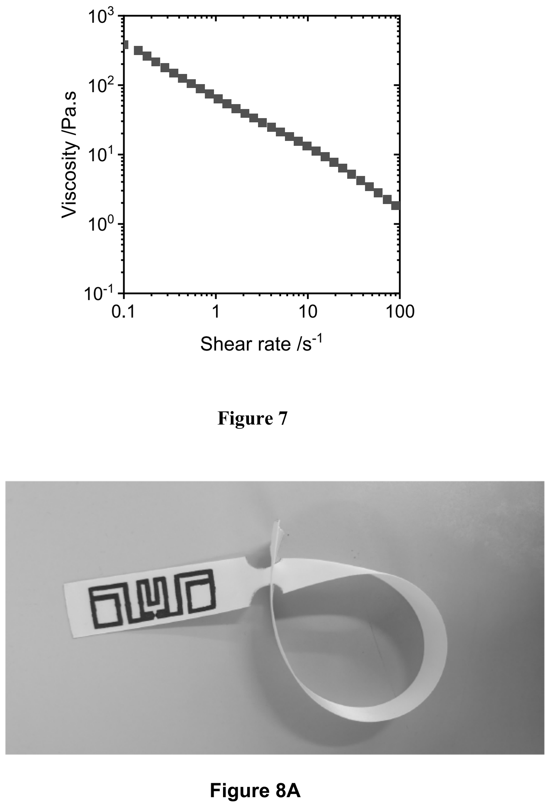

The viscosity of the composition is important to ensure that it can be printed to form a film. In addition, the composition should be viscous enough to prevent flocculation of the carbon nanomaterials within the composition. The precise viscosity will of course depend on the application of the composition (and the resulting film). The thickening agent also ensure that the inks have a viscosity suitable for printing, e.g. screen printing. The inks suitable for screen-printing are typically thixotropic and therefore their viscosity is dependent on shear rate. As shown in Figure 7 the inks may have a viscosity of from 100 to 1000 Pa.s at a shear rate of 0.1/s and/or may have a viscosity of from 1 to 10 at a shear rate of 100/s.

The compositions may also include one or more surfactants. The surfactants are typically non-ionic surfactants. Examples of suitable non-ionic surfactants include polyethylene oxide-based (PEO) surfactants (e.g. Triton X-100), polypropylene oxide-based (PPO) surfactants, cyclodextrins and polyvinyl pyrrolidone (PVP) surfactants. However, ionic surfactants, such sulphate-based surfactants (such as sodium dodecyl sulphate) or cholate salts (e.g. sodium cholate) may also be used.

The total concentration of the surfactants may be in the range of 0.01% to 1% or 0.01% to 0.5% by weight of the total composition (including the solvent), for example from 0.05% to 0.2% by weight of the total composition.

The compositions may also comprise one or more solvents and or adhesives in order to improve adhesion of the dried film (formed by printing the ink) to a substrate. The nature and combinations of adhesives will of course be dependent on the substrate.

The compositions may also comprise one or more cross-linking agents in order to improve the rheological parameters of the ink and/or properties of resulting films. This may include a wide range of functional organic acids or bases such as ascorbic acid. Examples of further cross-linking agents include di- and tri-carboxylic acids, such as glutaric acid and trimesic acid. This crosslinking serves to stabilise films from rapid redissolution and effects of ambient humidity on conductivity.

In addition, the compositions may further comprise a setting agent, which is a material that cures upon exposure to heat or radiation to cure and set the liquid ink compositions into a solid film. These include photocurable monomers or infra-red activated agents, e.g. epoxides (which may undergo ring opening reactions), aldehydes or acids (which may undergo esterification reactions) such as citric acid. Alternatively, films formed with mono-valent binders such as sodium carboxymethyl cellulose may be treated with aqueous solutions of bi, tri or tetra valent ionic salts such as Calcium (II) Chloride or Calcium (II) Sulphate to form insoluble films upon ion exchange.

To aid the printability and robustness of this invention, other additives may be included in the final ink blend. This may include an humectant to ensure that the wetting and drying characteristics are suitable for screen printing and cross-linking agents to immobilise resultant coatings such that they impart a degree of additional functional performance (resistance to humidity and other solvents that printed or coated films are exposed to. In aqueous based compositions, the addition of urea, glycerin or glycols such as polypropylene glycol as humectants slows the ink drying process such that constant and repeatable printing can be obtained.

In an exemplary embodiment, the invention provides a liquid composition comprising:

(a) graphite nanoplatelets in a weight range of 5% to 15% (w/w);
(b) carbon nanotubes in a weight range of 0.05% to 0.5% (w/w);
(c) carboxymethylcellulose in a weight range of 0.1% to 1.0% (w/w);
(d) sodium cholate in a weight range of 0.01% to 0.5%; and
(e) water.

In a further exemplary embodiment, the invention provides a liquid composition comprising:

(a) graphite nanoplatelets in a weight range of 5% to 15% (w/w);
(b) carbon nanotubes in a weight range of 0.05% to 0.5% (w/w);
(c) carboxymethylcellulose in a weight range of 0.1% to 1.0% (w/w);
(d) sodium cholate in a weight range of 0.01% to 0.2%; and
(e) water.

A preferred component of the liquid composition is, as described elsewhere, a cellulose derivative. Ethylcellulose, methylcellulose, hydroxypropylcellulose, carboxymethylcellulose and hydroxyethylcellulose are suitable. Carboxymethylcellulose (CMC) and its derivatives are especially suitable. A salt of carboxymethyl cellulose, for example the sodium salt, may also be used.

In testing of the invention, CMC has been found to provide the compositions with strong binding affinity for cellulosic materials such as paper and card, and is anticipated similarly to bind to cotton, making it ideal for these substrates. In use, CMC formed a stable hydrogel with water and provided a printable, highly conducting ink that adhered to paper.

In a further aspect, the invention provides a method of making an ink as defined herein, the method comprising:

(i) obtaining exfoliated graphite nanoplatelets, as defined herein;
(ii) obtaining exfoliated single-walled carbon nanotubes, as defined herein; and
(iii) dispersing the exfoliated graphite nanoplatelets, exfoliated single walled-carbon nanotubes, a thickening agent and optionally a surfactant, in a solvent.

To ensure homogenous mixing of the nanoplatelets and carbon nanotubes, the mixture in step iii) may be subjected to a high shear mixing stage. In addition, a further step of compressing (e.g. roll milling) the ink may take place to degas the ink. This facilitates printing of the inks onto substrates.

The compositions described above can be used as inks for printing onto a variety of substrates including flexible polymers (such as polyethylene terephthalates, polypropylenes and polyimides), elastomers (such as silicones and polyurethanes), metallic foils and films (such as aluminium, copper, gold and platinum foils/films) and rigid substrates (such as silicon wafer, glass, quartz and polycarbonates).

The inks described herein can be printed onto cellulosic substrate materials, such as paper.

Accordingly, in a further aspect of the invention there is provided a substrate (e.g. a cellulose-based substrate) onto which a conducting ink has been printed, the conducting ink being a liquid composition as defined herein.

The invention also provides a method of printing a conducting ink onto a substrate (e.g. a cellulose-based substrate), the conducting ink being a liquid composition as defined herein.

The cellulose-based substrate is typically a paper or card.

The inks may be printed using a variety of printing techniques, for example screen printing or inkjet printing.

The ideal behaviour of screen printable inks requires a thixotropic rheology profile such that shear thinning occurs within the printing process and then elastic recovery to stabilise the printed structure at the resolution required for drying or curing. Such behaviour is beneficial for the high-resolution printing of lines and interconnects for printed electronic applications. For the construction of an electronic circuit which is amenable to 'bare-die' or unencapsulated silicon components, a print fidelity of typically better than 125 microns maybe preferable for automated die attachment methods.

As described above the carbon nanomaterials may be graphite nanoplatelets, single-walled carbon nanotubes or a mixture thereof and the cellulose-based binder may be carboxymethylcellulose. The films may also contain graphite particles as conductive carbon particles.

The conducting ink may also have additional components or properties as described herein.

This invention combines the high conductivity of nanocarbon material combinations alongside the thixotropic rheology needed for good printing characteristics.

The conductive inks can be used for printing in a wide range of applications including, but not limited to, microwave antennas, **RFID** tags, biosensing electrodes, printed heaters, wireless induction coils, metasurfaces for tunable low emissivity and reflectivity coatings, strain sensors, surface acoustic wave devices, temperature sensors, energy storage electrodes and electrolytes for super capacitors, batteries, capacitive sensors, flexible, stretchable or structural electronic conductors, low density aerogels for catalysis, electrical storage and chemical remediation, self-healing coatings and drug delivery platforms.

In a further aspect, the invention provides an **RFID** tag comprising an antenna deposited (e.g. printed) from a liquid composition described herein onto a substrate. The substrate may be a plastic polymeric substrate (such as PET) or a cellulosic substrate (such as paper).

Also provided herein is a textile substate onto which a conducting ink has been printed, the conducting ink comprising:

    (i) conductive carbon particles (for example carbon nanomaterials); and
    (ii) a binding agent that binds to cellulose, suitably a cellulose derivative.

The invention also provides a method of printing a conducting ink onto a textile, the conducting ink comprising:

    i) conductive carbon particles (for example carbon nanomaterials);
    ii) a cellulose derivative; and
    iii) a solvent.

The inks may have the properties described above in relation to other aspects of the invention.

The textile may be either a woven or non-woven textile. For example, the woven textile may be woven from fibres to attain greater strain to break properties and allow for a diagonally applied strain to be relieved. This imparts additional mechanical integrity to the printed films upon stretching. The pitch of the weft and warp in the woven fabric is typically at least 100 threads per cm so as to not limit the resolution of the print through surface roughness. Planarisation of the substrate via applied surface coatings to lower the surface roughness may be added to improve the print resolution. Surface chemical treatment of the textile via corona discharge process may also be applied to improve the wettability and printability of the substrate.

The fibres may be natural fibres such as cotton, silk, or synthetic fibres, such as polymers including polyester, nylon, polyurethane, polyolefins such as polyethylene and polypropylene, modified and reconstituted cellulose such as viscose. These fibres may be spun and woven in combination with each other to provide additional performance.

The selection of woven materials may allow some bleed of the ink into the body of the woven substrate to increase the thickness of the printed film. The desired thickness of the printed films is preferably greater than 5 microns, for example greater than 10 microns. This ensures that the sheet resistance may drop to below 10 Ohm/Square to provide sufficient conductivity for **RFID** applications.

Also provided herein is a thermoplastic substate onto which a conducting ink has been printed, the conducting ink comprising:

(i) conductive carbon particles (for example carbon nanomaterials); and
(ii) a binding agent that binds to cellulose, suitably a cellulose derivative.

The invention also provides a method of printing a conducting ink onto a thermoplastic substrate, the conducting ink comprising:

i) conductive carbon particles (for example carbon nanomaterials);
ii) a cellulose derivative; and
iii) a solvent.

The inks may have the properties described above in relation to other aspects of the invention.

As described herein, the inks can be used to print **RFID** antenna. Accordingly, also provided herein is an **RFID** tag comprising a textile or thermoplastic substrate, onto which **an RFID** antenna has been printed, wherein the **RFID** antenna comprising conductive carbon particles (for example, carbon nanomaterial, such as carbon nanoplatelets and/or carbon nanotubes) and a binding agent (such as a cellulose derivative, e.g. carboxymethylcellulose).

The **RFID** antenna may have the properties of the films printed from the inks described herein. Similarly, the textile and thermoplastic substrates may have the properties described above.

The tag typically comprises a flat portion on which the **RFID** antenna is printed and a loop or means for forming a loop (e.g. an aperture through which an end of the tag cab be threaded) to allow the tag to be attached to an object of interest.

The tag may be substantially planar in shape, in that its thickness may be substantially less than its length or width. Typically, the tag has a thickness of 3mm or less, for example 2mm or less, such as 1mm or less.

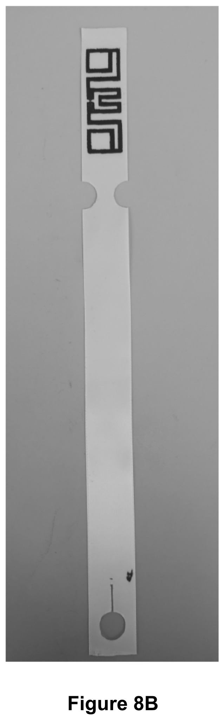

The tag may be formed from an elongate strip of material (e.g. textile or thermoplastic) wherein its length is greater than its width. At one end of the length of the tag, an aperture may be provided, through which the send end of the length of the tag can be inserted to provide a "loop lock tag" (see Figures 8A and 8B). The size of shape of the aperture allows the loop tag to be held together in a gentle and reversible manner.

As an alternative to the "loop lock tag" described above, the tag may be a planar tag as described above fitted with complementary Velcro® portions to allow for parts of the tag to be secured together to form a loop.

The tags may be encapsulated with an overcoat, such as a polyurethane or silicone, overcoat to improve their wear resistance and resistance to damage from e.g. water.

Alternatively, the tag may be provided in a continuous extended form as a tape format with assembled tags fabricated at regular intervals.

Accordingly, the invention makes use of a water-based, high conductivity ink, which achieves the necessary sheet resistance for use as an RFID good antenna, in the production of RFID tags. Whereas conventional RFID tags make use of metal materials, making them difficult to recycle, the carbon-based RFID tags of the invention provide a more environmentally friendly alternative. In addition, the combination of cellulose-based binders and carbon nanomaterials allow for some flexibility and stretchability to overcome stress fatigue, which may be present in metal-based antennas. In addition, carbon-based RFID may exhibit non-magnetic properties which enables them to be used in food production environments.

In a further aspect, the invention provides a printed heater comprising a heating element printed from a liquid composition described herein onto a substrate.

The measurement of strain on surfaces may be utilised for many industrial applications. Nanocarbon based printed structures exhibit strain dependent conductivity when applied to substrates at or above their percolation threshold. Polymer binder-based films exhibit reproducible elastic properties beyond the used of conductive metals which may break before the elastic limit of the substrate is reached. By utilising the invention therein, the measurement of high strain (>2%) regimes on elastic substrates is enabled with good reproducibility. Furthermore, this elastic behaviour may be extended into the modification of antenna resonance characteristics (frequency and Q factor). A novel example is presented where in the resonant behaviour of printed UHF RF antenna on an elastic substrate can be monitored without need for an internal power source or processing circuit.

In a further aspect, the invention provides a liquid composition deposited described herein deposited (e.g. printed) onto a stretchable substrate.

Additional embodiments of the invention are set out below:

1. An electrically conductive film comprising graphene nanoplatelets packed in a substantially Apollonian manner.

2. A film according to embodiment 1 wherein the graphene nanoplatelets have a packing efficiency of greater than 10%.

3. A film according to embodiment 1 or embodiment 2 wherein the graphene nanoplatelets comprise a first population of nanoplatelets having a first size and a population of nanoplatelets having a second size of up to 25 % of the first size.

4. A film according to embodiment 3 wherein the first population of nanoplatelets have a length/width of $1\mu m$ or greater.

5. A film according to embodiment 3 or embodiment 4 wherein the first population of graphene nanoplatelets comprises 40% or greater (w/w) of the total amount of nanoplatelets in the film.

6. A film according to any one of embodiments 1 to 5 wherein the film has a density of greater than $250kg/m^3$.

7. A film according to any one of embodiments 1 to 6 further comprising carbon nanotubes.

8. A film according to any one of embodiments 1 to 7 wherein the graphite nanoplatelets are typically present in the film in an amount of from 92% (w/w).

9. A liquid composition comprising:

(i) a first population of graphene nanoplatelets;
(ii) a second population of graphene nanoplatelets having an average size of up to 25 % of the average size of the first population of graphene nanoplatelets;
(iii) a thickening agent; and
(iv) a solvent.

10. A liquid composition according to embodiment 9 further comprising carbon nanotubes.

11. A film according to any one of embodiments 1 to 8 or a liquid composition according to embodiment 9 or embodiment 10 wherein the graphite nanoplatelets have layer number of 30 or less.

12. A liquid composition according to any one of embodiments 9 to 11 wherein the first population of nanoplatelets have a length/width of $1\mu m$ or greater.

13. A liquid composition according to any one of embodiments 9 to 12 wherein the first population of graphene nanoplatelets comprises 40% or greater (w/w) of the total amount of nanoplatelets in the film.

14. A film according to embodiment 7 or liquid composition according to embodiment 10 wherein the carbon nanotubes are singled-walled carbon nanotubes, optionally having a mean diameter of from 1nm to 5nm and/or a length of greater than $3\mu m$.

15. A liquid composition according to any one of embodiments 9 to 14 wherein the graphite nanoplatelets are typically present in the liquid composition in an amount of from 5% (w/w), and optionally up to 15% (w/w).

16. A liquid composition according to any one of embodiments 10 to 15, which comprises carbon nanotubes, wherein the carbon nanotubes may be present in the liquid composition in an amount of up to 0.5% (w/w).

17. A liquid composition according to any one of embodiments 10 to 15, which comprises carbon nanotubes, wherein the carbon nanotubes may be present in the liquid composition in an amount of up to 0.2% (w/w).

18. A film or a liquid composition according to any one of embodiments 1 to 17, which comprises carbon nanotubes, wherein the nanotubes are present in a weight ratio relative to the amount of graphite nanoplatelets of less than 1:30.

19. A film or a liquid composition according to any one of embodiments 1 to 17, which comprises carbon nanotubes, wherein the nanotubes are present in a weight ratio relative to the amount of graphite nanoplatelets of less than 1:40.

20. A film or a liquid composition according to any one of embodiments 1 to 17, which comprises carbon nanotubes, wherein the nanotubes are present in a weight ratio relative to the amount of graphite nanoplatelets of from 1:50 to 1:70 (carbon nanotubes:graphite nanoplatelets).

21. A liquid composition comprising:

(a) graphite nanoplatelets in a weight range of 5% to 15% (w/w);
(b) carbon nanotubes in a weight range of 0.05% to 0.5% (w/w);
(c) carboxymethylcellulose in a weight range of 0.1% to 1.0% (w/w);
(d) sodium cholate in a weight range of 0.01% to 0.5%; and
(e) water.

22. A textile or thermoplastic substate onto which a liquid composition according to any one of embodiments 9 to 21 has been printed.

23. A method of printing a liquid composition according to any one of embodiments 9 to 21 onto a textile or thermoplastic substrates.

24. An RFID tag comprising an RFID antenna formed from a film or a liquid composition as described in any one of embodiments 1 to 21.

25. An RFID tag according to embodiment 24 wherein the tag comprises a flat portion on which the RFID antenna is printed and a loop or means for forming a loop to allow the tag to be attached to an object of interest.

## Brief Description of the Drawings

Figure 1 is a plot showing the percolative relationship between electrical conductivity and carbon nanotube (CNT) weight fraction (% wt) of dry CNT-graphene nanoplatelet hybrid films.

Figure 2 is a plot of normalised single-pass sheet resistance as a function of CNT weight fraction for films prepared using GNPs of different relative density $\rho$.

Figure 3 is an Atomic Force Microscopy (AFM) image showing individualised carbon nanotubes in the films of the invention.

Figure 4 is a schematic diagram showing respective length, width and thickness parameters of a few-layer carbon nanoplatelet.

Figure 5 shows the size distribution of the graphene nanoplatelets used in Example 1 below.

Figure 6 is a scanning electron microscope (SEM) image showing the position of carbon nanotubes within a packed matrix of graphene nanoplatelets.

Figure 7 is a rheology trace showing the viscosity of the ink described in Example 2 below.

Figures 8A and 8B show a tag on which an RFID tag has been printed using the inks described herein.

## Examples

### Example 1 - Characterisation of Graphene Nanoplatelets

A sample of liquid phase exfoliated graphene nanoplatelets was obtained having a lateral size of up to $8\mu$m (or alternatively up to $50\mu$m) and an average lateral size of approximately $5\mu$m and a thickness of up to 30nm.

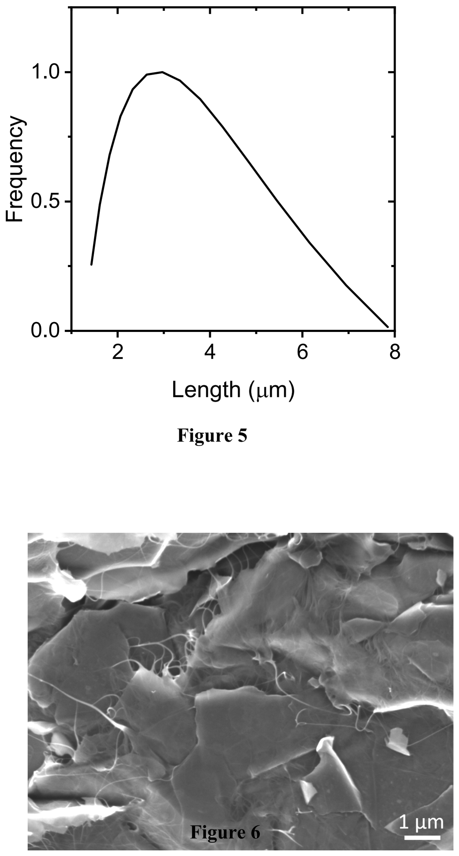

Dynamic light scattering (DLS) of GNP dispersions measures the hydrodynamic radius of the nanoplatelets. A conversion to length is done by using a literature metric (Lotya *et al.* DOI: 10.1088/0957-4484/24/26/265703). The size distribution of the graphene nanoplatelets used in Example 2 below is shown in Figure 5.

Due to the broad distribution of particle sizes, the obtained nanoplatelets were considered useful for the production of Apollonian packed films.

Example 2 - Ink Formulations

The composition is given in the table below for a batch of an ink prepared. The total solids content of the prepared ink (including binders etc.) was approximately 9 wt%.

| Material | Mass (g) | Fraction of dry film (wt%) |
|---|---|---|
| Graphite Nanoplatelets (as described in Example 1) | 24 | 94.8 |
| Single Walled Carbon Nanotubes (Tuball Batt-H2O SWCNTs supplied by OCSiAl) | 0.405 | 1.6 |
| Carboxymethylcellulose (sodium salt) | 0.608 | 2.4 |
| Sodium cholate | 0.308 | 1.2 |

To make the ink, the components were weighed into a suitable container. A NutriBullet NB-WL076G-23 blender was used to mix the components in a sealed vessel for 1 minute under ambient laboratory conditions prior to high-pressure homogenisation using an apparatus of the type described in WO 2020/074698.

The graphite nanoplatelets have a distribution of lateral sizes of from 700 nm to 8000nm and have thicknesses of up to around 20 nm, as described in Example 1.

Structural characterisation was performed by SEM, indicating that there is a dense network of carbon nanotubes that exists in the interstitial spaces between packed graphite nanoplatelets (see Figure 6).

The viscosity of the ink was measured over a shear rate of 0.1/s to 100/s. The inks were found to be thixotropic and the rheology trace is shown in Figure 7. As shown in Figure 7, the ink exhibited a viscosity of from 100 to 1000 Pa.s at a shear rate of 0.1/s and/or may have a viscosity of from 1 to 10 at a shear rate of 100/s.

The inks were successfully printed on a range of substrates including several grades of polyethylene terephthalate (PET) substrate (DuPont Tejin ST504 & Felix Scholler F40100) and paper substrates.

The conductivities of the printed films were measured using a four-point probe, in accordance with International Electrotechnical Commission standard IEC TS 62607-2-1:2012. The film thickness was measured via SEM cross-sectional analysis or scanning probe profilometry and the conductivity and thickness were used to calculate the specific conductivity. Conductivities of up to 3.8 ($\pm$0.1) x$10^4$ S$m^{-1}$ were observed for the printed films.

Accordingly, the invention provides highly conductive inks formed from carbon nanomaterials and in particular highly conductive inks formed from carbon nanomaterials that can be printed onto substrates.

Example 3 - RFID Tag

An RFID tag was produced using the ink described in Example 2 above.

A tag was cut from recycled close weave polyester with the general shape shown in Figure 8B. As shown in Figure 8B, the tag is generally rectangular in shape with a circular hole near one end of the tag. A semi-circular cut out is provided on each of the longer edges of the tag.

At the end of the tag opposite to the circular hole, an RFID antenna was printed from the ink described in Example 2. The ink was shown to have good adhesion to the woven polyester substrate.

In use, the end of the tag on which the RFID antenna has been printed can be fed through the circular hole in the other end of the tag to form a loop as shown in Figure 8A. The semi-circular cut outs are located in a position within the circular hole to secure the loop in place.

The tag can thus be attached to animals or other objects where it is beneficial to provide them with an RFID tag. The tag is resistant to water-based liquids. The tag also has the advantage that is does not comprise any metallic materials and is both flexible and removable.

Similar tags were produced using PET silks or PET films. The read range of the resulting RFID tags using these materials was measured to be approximately 1.6m when attached to a human volunteer. These results therefore validated the use of the tags in meat processing applications.

**Claims**

1. A liquid composition comprising:

(i) a first population of graphene nanoplatelets;
(ii) a second population of graphene nanoplatelets having an average size of up to 25 % of the average size of the first population of graphene nanoplatelets;
(iii) a thickening agent; and
(iv) a solvent.

2. A liquid composition according to claim 1 further comprising carbon nanotubes.

3. A liquid composition according to claim 2, wherein the carbon nanotubes are single-walled carbon nanotubes, optionally having a mean diameter of from 1nm to 5nm and/or a length of greater than 3$\mu$m.

4. A liquid composition according to claim 2 or claim 3, wherein the carbon nanotubes may be present in the liquid composition in an amount of up to 0.5% (w/w).

5. A liquid composition according to any one of claims 2 to 4, wherein the carbon nanotubes may be present in the liquid composition in an amount of up to 0.2% (w/w).

6. A liquid composition according to any one of claims 1 to claim 5, wherein the graphene nanoplatelets have layer number of 30 or less.

7. A liquid composition according to any one of claims 1 to 6, wherein the first population of graphene nanoplatelets have a length/width of 1$\mu$m or greater.

8. A liquid composition according to any one of claims 1 to 7, wherein the first population of graphene nanoplatelets comprises 40% or greater (w/w) of the total amount of nanoplatelets in the liquid composition.

9. A liquid composition according to any one of claims 1 to 8, wherein the graphene nanoplatelets are typically present in the liquid composition in an amount of from 5% (w/w), and optionally up to 15% (w/w).

10. A liquid composition according to any one of claims 1 to 9, wherein the carbon nanotubes are present in a weight ratio relative to the amount of graphene nanoplatelets of less than 1:30.

11. A liquid composition according to any one of claims 1 to 10, wherein the carbon nanotubes are present in a weight ratio relative to the amount of graphene nanoplatelets of from 1:50 to 1:70 (carbon nanotubes:graphene nanoplatelets).

12. A liquid composition according to any one of claims 1 to 11 comprising:

(a) graphene nanoplatelets in a weight range of 5% to 15% (w/w);
(b) carbon nanotubes in a weight range of 0.05% to 0.5% (w/w);
(c) carboxymethylcellulose in a weight range of 0.1% to 1.0% (w/w);
(d) sodium cholate in a weight range of 0.01% to 0.5%; and
(e) water.

13. A textile or thermoplastic substate onto which a liquid composition according to any one of claims 1 to 12 has been printed.

14. A method of printing a liquid composition according to any one of claims 1 to 12 onto a textile or thermoplastic substrate.

15. An RFID tag comprising an RFID antenna formed from a liquid composition as described in any one of claims 1 to 12.

**Figure 1**

**Figure 2**

**Figure 3**

**Figure 4**

**Figure 5**

**Figure 6**

1 µm

**Figure 7**

**Figure 8A**

**Figure 8B**

REFERENCES CITED IN THE DESCRIPTION

**Patent documents cited in the description**

- US 10244628 B
- WO 2017060497 A1, Ferrari
- EP 2021055458 W
- WO 2021175989 A
- WO 2020074698 A

**Non-patent literature cited in the description**

- **KHAN et al.** The preparation of hybrid films of carbon nanotubes and nano-graphite/graphene with excellent mechanical and electrical properties. *Carbon*, 2010, vol. 48, 2825-2830
- **PAN et al.** Sustainable production of highly conductive multilayer graphene ink for wireless connectivity and IoT applications. *Nature Comm.*, 2018, vol. 9, 5197
- **JORDAN, EDWARD CONRAD**. Electromagnetic Waves and Radiating Systems. Prentice Hall, 1968
- **ALAFOGIANNI et al.** *Colloids and Surfaces A: Physicochemical and Engineering Aspects*, 2006, vol. 495, 118-124
- **C. BACKES et al.** Spectroscopic metrics allow in-situ measurement of mean size and thickness of liquid-exfoliated graphene nanosheets. *Nanoscale*, 2016
- *Gels*, 2018, vol. 4, 54